(19) Europäisches Patentamt European Patent Office Office européen des brevets

(11) **EP 3 671 931 A1**

(12) **EUROPEAN PATENT APPLICATION**

(43) Date of publication:
**24.06.2020 Bulletin 2020/26**

(51) Int Cl.:
***H01M 10/052*** *(2010.01)* ***H01M 10/0562*** *(2010.01)*

(21) Application number: **19213587.9**

(22) Date of filing: **04.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2018 JP 2018236191**

(71) Applicant: **Toyota Jidosha Kabushiki Kaisha Aichi-Ken 471-8571 (JP)**

(72) Inventor: **HIRAMOTO, Natsumi Toyota-shi, Aichi-ken,, 471-8571 (JP)**

(74) Representative: **Kuhnen & Wacker Patent- und Rechtsanwaltsbüro PartG mbB Prinz-Ludwig-Straße 40A 85354 Freising (DE)**

(54) **SOLID ELECTROLYTE LAYER AND ALL-SOLID-STATE BATTERY**

(57) Provided is a solid electrolyte layer configured to suppress cracking when external force is applied thereto, and an all-solid-state battery comprising the solid electrolyte layer. Disclosed is a solid electrolyte layer, wherein the solid electrolyte layer is a solid electrolyte layer for all-solid-state batteries, and wherein the solid electrolyte layer comprises a stabilized zirconia having a tetragonal crystal structure.

FIG. 1

EP 3 671 931 A1

**Description**

TECHNICAL FIELD

The disclosure relates to a solid electrolyte layer and an all-solid-state battery.

BACKGROUND

In recent years, with the rapid spread of IT and communication devices such as personal computers, camcorders and cellular phones, great importance has been attached to the development of batteries that is usable as the power source of such devices. In the automobile industry, etc., high-power and high-capacity batteries for electric vehicles and hybrid vehicles are under development.

Of all-solid-state batteries, an all-solid-state lithium ion battery has attracted attention, due to its high energy density resulting from the use of a battery reaction accompanied by lithium ion transfer, and due to the use of a solid electrolyte as the electrolyte present between the cathode and the anode, in place of a liquid electrolyte containing an organic solvent.

Patent Literature 1 discloses a powder for solid electrolytes, in which $ZrO_2$ containing a rare-earth element is used for the purpose of obtaining a solid electrolyte configured to keep low production process temperatures and obtain excellent mechanical properties and ion conductivity.

For the purpose of increasing the mechanical strength of a gas sensor element, Patent Literature 2 discloses a gas sensor element including a reinforcement layer containing tetragonal zirconia.

Patent Literature 3 discloses a stabilized tetragonal zirconia microparticle which does not require high-temperature treatment, which shows high crystallinity, which has an average particle size of 10 nm or less, and which can be used as a ceramic for structural materials or a solid electrolyte.

Patent Literature 1: Japanese Patent Application Laid-Open (JP-A) No. 1999-214019
Patent Literature 2: JP-A No. 2017-211186
Patent Literature 3: JP-A No. 2008-184339

A solid electrolyte layer containing a conventional solid electrolyte has a problem in that cracking easily occurs in the solid electrolyte layer since, when external force is applied to the solid electrolyte layer, it is difficult for the solid electrolyte layer to follow the external force and deform.

SUMMARY

In light of the above circumstances, an object of the disclosed embodiments is to provide a solid electrolyte layer configured to suppress cracking when external force is applied thereto, and an all-solid-state battery comprising the solid electrolyte layer.

In a first embodiment, there is provided a solid electrolyte layer, wherein the solid electrolyte layer is a solid electrolyte layer for all-solid-state batteries, and wherein the solid electrolyte layer comprises a stabilized zirconia having a tetragonal crystal structure.

When a total volume of the solid electrolyte layer is determined as 100 volume %, the stabilized zirconia contained in the solid electrolyte layer may be 9.8 volume % or more and 24.0 volume % or less.

The stabilized zirconia may be a solid solution containing, as a stabilizer for the tetragonal crystal structure, at least one oxide selected from the group consisting of $Y_2O_3$, $CeO_2$, MgO and CaO.

The all-solid-state battery of the disclosed embodiments is an all-solid-state battery comprising a cathode, an anode and a solid electrolyte layer disposed between the cathode and the anode, wherein the solid electrolyte layer is the solid electrolyte layer described above.

According to the disclosed embodiments, a solid electrolyte layer configured to suppress cracking when external force is applied thereto, and an all-solid-state battery comprising the solid electrolyte layer can be provided.

BRIEF DESCRIPTION OF THE DRAWING

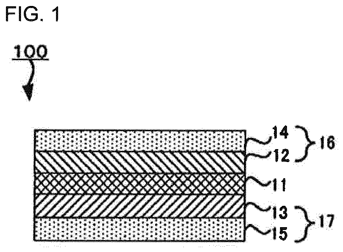

FIG. 1 is a schematic sectional view of an example of the all-solid-state battery of the disclosed embodiments.

DETAILED DESCRIPTION

According to the disclosed embodiments, a solid electrolyte layer is provided, wherein the solid electrolyte layer is a solid electrolyte layer for all-solid-state batteries, and wherein the solid electrolyte layer comprises a stabilized zirconia having a tetragonal crystal structure.

When stress is applied to the stabilized zirconia having the tetragonal crystal structure, phase transformation from tetragonal to monoclinic crystal structure occurs, and the volume of the stabilized zirconia expands at that time.

It was found that by incorporating, as an additive, the stabilized zirconia having the tetragonal crystal structure in the solid electrolyte layer, the cracking resistance of the solid electrolyte layer, which is shown when external force is applied to the solid electrolyte layer, can be increased.

The reason is presumed as follows. By incorporating the stabilized zirconia having the tetragonal crystal structure in the solid electrolyte layer, the volume of the stabilized zirconia expands along with the phase transformation caused by applying stress to the stabilized zirconia. Accordingly, stress which serves to suppress the development of cracking in a site where the cracking is caused by applying external force to the solid electrolyte layer, can be generated, and the development of the cracking of the solid electrolyte layer can be suppressed.

[Solid electrolyte layer]

The solid electrolyte layer comprises at least the stabilized zirconia having the tetragonal crystal structure and a solid electrolyte.

The stabilized zirconia having the tetragonal crystal structure, functions as a crack suppressing material that serves to suppress the development of the cracking of the solid electrolyte layer as follows: when stress is applied thereto, the phase transformation from tetragonal to monoclinic crystal structure occurs and induces the volume expansion by which the development of the cracking of the solid electrolyte layer is suppressed. Of the cubic, tetragonal and monoclinic crystal structures of zirconia, only the tetragonal crystal structure causes phase transformation when stress is applied thereto. In addition to zirconia, metals and the like causes phase transformation. However, metals are not suitable as a material for the solid electrolyte layer, since they have electron conductivity.

At room temperature, zirconia (zirconium oxide, i.e., $ZrO_2$) in monoclinic state is most stable. In a high temperature range, it causes phase transformation and changes into cubic or tetragonal state. By dissolving a stabilizer in zirconia, the zirconia can be stabilized in cubic or tetragonal state at or around normal temperature.

The solid electrolyte layer comprises, as the tetragonal zirconia, the stabilized zirconia in which the stabilizer is dissolved. In the disclosed embodiments, "stabilized zirconia" encompasses "partially stabilized zirconia" in which at least part of the crystal structure is stabilized.

As the stabilizer, examples include, but are not limited to, oxides such as yttrium oxide ($Y_2O_3$), calcium oxide (CaO), magnesium oxide (MgO) and cerium oxide ($CeO_2$).

In the disclosed embodiments, yttrium stabilized zirconia (YSZ) obtained by dissolving yttrium oxide ($Y_2O_3$) in zirconia, may be used. For example, in the case of using yttrium oxide ($Y_2O_3$) as the stabilizer, the amount of the yttrium oxide added to zirconia may be from 1 mol % to 8 mol %. The amount may be 3 mol % since the percentage of the tetragonal part of the zirconia can be highly increased.

The amount of the stabilizer added to the zirconia may be from 3 mol % to 13 mol % when the stabilizer is calcium oxide (CaO); it may be from 5 mol % to 10 mol % when the stabilizer is magnesium oxide (MgO); and it may be from 8 mol % to 16 mol % when the stabilizer is cerium oxide ($CeO_2$).

The method for dissolving the stabilizer in the zirconia is not particularly limited, and a conventionally-known method may be used.

The form of the tetragonal stabilized zirconia is not particularly limited. It may be a particulate form.

When the tetragonal stabilized zirconia is in a particulate form, it is highly dispersible in solvent, etc., and a solid electrolyte layer paste can be easily produced. Also, due to the high dispersibility, aggregation or segregation of the stabilized zirconia can be suppressed at the time of dispersing the stabilized zirconia; it is easy to allow the stabilized zirconia to be uniformly present in the solid electrolyte layer; and the cracking of the solid electrolyte layer can be evenly suppressed. In addition, unlike the below-described binder, the particles of the tetragonal stabilized zirconia can suppress the aggregation of the solid electrolyte in the production of the solid electrolyte layer paste.

The percentage of the tetragonal stabilized zirconia contained in the solid electrolyte layer, is not particularly limited, since the cracking of the solid electrolyte layer can be suppressed as long as the tetragonal stabilized zirconia is contained in the solid electrolyte layer. When the total volume of the solid electrolyte layer is determined as 100 volume %, the lower limit of the percentage of the tetragonal stabilized zirconia contained in the solid electrolyte layer, may be 4.9 volume % or more (from the viewpoint of further suppressing the cracking of the solid electrolyte layer) or may be 9.8 volume % or more (from the viewpoint of balance between the effect of suppressing the cracking of the solid electrolyte layer and the lithium ion conductivity of the solid electrolyte layer). The upper limit may be 28.0 volume % or less (from the viewpoint of further suppressing the cracking of the solid electrolyte layer), may be 24.0 volume % or less (from the viewpoint of balance between the effect of suppressing the cracking of the solid electrolyte layer and the lithium ion conductivity of the solid electrolyte layer), may be 20.0 volume % or less, or may be 17.0 volume % or less.

The percentage of the tetragonal stabilized zirconia contained in the solid electrolyte layer can be obtained by X-ray diffraction measurement (XRD).

As the solid electrolyte, examples include, but are not limited to, a sulfide-based solid electrolyte and an oxide-based solid electrolyte.

As the sulfide-based solid electrolyte, examples include, but are not limited to, $Li_2S-P_2S_5$, $Li_2S-SiS_2$, $LiX-Li_2S-SiS_2$, $LiX-Li_2S-P_2S_5$, $LiX-Li_2O-Li_2S-P_2S_5$, $LiX-Li_2S-P_2O_5$, $LiX-Li_3PO_4-P_2S_5$ and $Li_3PS_4$. The "$Li_2S-P_2S_5$" means a material composed of a raw material composition containing $Li_2S$ and $P_2S_5$, and the same applies to other solid electrolytes. Also, "X" in the "LiX" means a halogen element. The LiX contained in the raw material composition may be one or more kinds. When two or more kinds of LiX are contained in the raw material composition, the mixing ratio is not particularly limited.

The molar ratio of the elements in the sulfide-based solid electrolyte can be controlled by controlling the contents of the elements contained in raw materials. The molar ratio and composition of the elements in the sulfide-based solid electrolyte can be measured by inductively coupled plasma atomic emission spectroscopy, for example.

The sulfide-based solid electrolyte may be a glass, a crystal material or a crystalline glass ceramic.

The crystal state of the sulfide-based solid electrolyte can be confirmed by X-ray powder diffraction measurement using CuKα radiation, for example.

The glass can be obtained by amorphizing a raw material composition (such as a mixture of $Li_2S$ and $P_2S_5$). The raw material composition can be amorphized by mechanical milling, for example. The mechanical milling may be dry mechanical milling or wet mechanical milling. The mechanical milling may be the latter because attachment of the raw material composition to the inner surface of a container, etc., can be prevented.

The glass ceramic can be obtained by heating a glass, for example.

The crystal material can be obtained by heating a glass or developing a solid state reaction of the raw material composition, for example.

As the oxide-based solid electrolyte, examples include, but are not limited to, $Li_{6.25}La_3Zr_2Al_{0.25}O_{12}$, $Li_3PO_4$, and $Li_{3+x}PO_{4-x}N_x$ (LiPON).

From the viewpoint of handling, the form of the solid electrolyte may be a particulate form.

The average particle diameter ($D_{50}$) of the solid electrolyte particles is not particularly limited. The lower limit may be 0.5 $\mu$m or more, and the upper limit may be 2 $\mu$m or less.

As the solid electrolyte, one or more kinds of solid electrolytes may be used. In the case of using two or more kinds of solid electrolytes, they may be mixed together.

In the disclosed embodiments, unless otherwise noted, the average particle diameter of particles is a volume-based median diameter ($D_{50}$) measured by laser diffraction/scattering particle size distribution measurement. Also in the disclosed embodiments, the median diameter ($D_{50}$) of particles is a diameter at which, when particles are arranged in ascending order of their particle diameter, the accumulated volume of the particles is half (50%) the total volume of the particles (volume average diameter).

The percentage of the solid electrolyte contained in the solid electrolyte layer, is not particularly limited. When the total volume of the solid electrolyte layer is determined as 100 volume %, the lower limit of the percentage of the solid electrolyte contained in the solid electrolyte layer, may be 50.0 volume % or more, may be 60.0 volume % or more, or may be 76.0 volume % or more, for example. The upper limit may be 90.2 volume % or less, for example.

From the viewpoint of exerting plasticity, etc., a binder for binding the solid electrolyte particles can be incorporated in the solid electrolyte layer. As the binder, examples include, but are not limited to, a binder that can be incorporated in the below-described cathode. However, the content of the binder in the solid electrolyte layer may be 5.0 volume % or less, from the viewpoint of preventing excessive aggregation of the solid electrolyte, enabling the formation of the solid electrolyte layer in which the solid electrolyte is uniformly dispersed, etc., for the purpose of easily achieving high battery power output.

The thickness of the solid electrolyte layer is not particularly limited and is appropriately controlled depending on the battery structure. It is generally 0.1 $\mu$m or more and 1 mm or less.

The solid electrolyte layer may be formed by pressure-forming a powdered material for forming the solid electrolyte layer, the material containing the solid electrolyte, the stabilized zirconia and, as needed, other components.

[All-solid-state battery]

The all-solid-state battery of the disclosed embodiments is an all-solid-state battery comprising a cathode, an anode and a solid electrolyte layer disposed between the cathode and the anode, wherein the solid electrolyte layer is the solid electrolyte layer described above.

FIG. 1 is a schematic sectional view of an example of the all-solid-state battery of the disclosed embodiments. In the accompanying drawings, for ease of illustration and understanding, the components shown in the figures are appropriately scaled down, or the horizontal to vertical dimensional ratio of the components is changed from the actual ratio and exaggerated.

As shown in FIG. 1, an all-solid-state battery 100 comprises a cathode 16 comprising a cathode layer 12 and a cathode current collector 14, an anode 17 comprising an anode layer 13 and an anode current collector 15, and a solid electrolyte layer 11 disposed between the cathode 16 and the anode 17.

[Cathode]

The cathode comprises at least the cathode layer. As needed, it comprises the cathode current collector.

The cathode layer contains a cathode active material. As optional components, the cathode layer may contain a solid electrolyte, an electroconductive material, a binder, etc.

The type of the cathode active material is not particularly limited. As the cathode active material, examples include, but are not limited to, a cathode active material represented by the following general formula: $Li_xM_yO_z$ (where M is a transition metal element; x is from 0.02 to 2.2; y is from 1 to 2; and z is from 1.4 to 4). The transition metal element M may be at least one selected from the group consisting of Co, Mn, Ni, V, Fe and Si, or it may be at least one selected from the group consisting of Co, Ni and Mn. As the cathode active material represented by the general formula $Li_xM_yO_z$, examples include, but are not limited to, $LiCoO_2$, $LiMnO_2$, $LiNiO_2$, $LiVO_2$, $LiNi_{1/3}Co_{1/3}Mn_{1/3}O_2$, $LiMn_2O4$, $Li(Ni_{0.5}Mn_{1.5})O_4$, $Li_2FeSiO_4$ and $Li_2MnSiO_4$.

Cathode active materials other than the one represented by the general formula $Li_xM_yO_z$ include, for example, lithium titivates (such as $Li_4Ti_5O_{12}$), lithium metal phosphates (such as $LiFePO_4$, $LiMnPO_4$, $LiCoPO_4$ and $LiNiPO_4$), transition metal oxides (such as $V_2O_3$ and $MoO_3$), $TiS_2$, LiCoN, Si, $SiO_2$, $Li_2SiO_3$, $Li_4SiO_4$, and lithium storage intermetallic compounds (such as $Mg_2Sn$, $Mg_2Ge$, $Mg_2Sb$ and $Cu_3Sb$).

The form of the cathode active material is not particularly limited. From the viewpoint of handling, it may be a particulate form.

A coating layer containing a Li ion conducting oxide may be formed on the surface of the cathode active material. This is because a reaction between the cathode active material and the solid electrolyte can be suppressed.

As the Li ion conducting oxide, examples include, but are not limited to, $LiNbO_3$, $Li_4Ti_5O_{12}$ and $Li_3PO_4$. For the thickness of the coating layer, the lower limit may be 0.1 nm or more, or it may be 1 nm or more, for example. On the other hand, the upper limit may be 100 nm or less, or it may be 20 nm or less, for example.

The content of the cathode active material in the cathode layer is not particularly limited. For example, it may be in a range of from 10 mass % to 100 mass %.

As the solid electrolyte used in the cathode layer, examples include, but are not limited to, those exemplified above as the solid electrolyte used in the above-described solid electrolyte layer.

The content of the solid electrolyte in the cathode layer is not particularly limited. For example, it may be in a range of from 1 mass % to 80 mass %.

As the electroconductive material, a known electroconductive material may be used. As the electroconductive material, examples include, but are not limited to, a carbonaceous material and metal particles. The carbonaceous material may be at least one selected from the group consisting of carbon nanotube, carbon nanofiber and carbon blacks such as acetylene black (AB) and furnace black. Of them, from the viewpoint of electron conductivity, the electroconductive material may be at least one selected from the group consisting of carbon nanotube and carbon nanofiber. The carbon nanotube and carbon nanofiber may be vapor-grown carbon fiber (VGCF). As the metal particles, examples include, but are not limited to, particles of Ni, particles of Cu, particles of Fe and particles of SUS.

The content of the electroconductive material in the cathode layer is not particularly limited.

As the binder, examples include, but are not limited to, acrylonitrile-butadiene rubber (ABR), butadiene rubber (BR), polyvinylidene fluoride (PVdF) and styrene-butadiene rubber (SBR). The content of the binder in the cathode layer is not particularly limited.

The thickness of the cathode layer is not particularly limited. For example, it may be from 10 μm to 250μm, or it may be from 20 μm to 200 μm.

The cathode layer can be formed by a conventionally-known method.

For example, a cathode layer slurry is produced by putting the cathode active material and the binder in a solvent and mixing them. The slurry is applied on one surface of a substrate such as the cathode current collector. The applied slurry is dried, thereby forming the cathode layer.

As the solvent, examples include, but are not limited to, butyl acetate, butyl butyrate, heptane and N-methyl-2-pyrrolidone.

The method for applying the cathode layer slurry on one surface of the substrate such as the cathode current collector, is not particularly limited. As the method, examples include, but are not limited to, a doctor blade method, a metal mask printing method, an electrostatic coating method, a dip coating method, a spray coating method, a roller coating method, a gravure coating method and a screen printing method.

The cathode layer may be formed by another method such as pressure-forming a powdered cathode mix that contains the cathode active material and, as needed, other components.

As the cathode current collector, a conventionally-known metal that is usable as a current collector in all-solid-state batteries, may be used. As the metal, examples include, but are not limited to, a metal material containing one or more elements selected from the group consisting of Cu, Ni, Al, V, Au, Pt, Mg, Fe, Ti, Co, Cr, Zn, Ge and In.

The form of the cathode current collector is not particularly limited. As the form, examples include, but are not limited to, various kinds of forms such as a foil form and a mesh form.

The form of the whole cathode is not particularly limited. It may be a sheet form. In this case, the thickness of the whole cathode is not particularly limited. It can be determined depending on desired performance.

[Anode]

The anode comprises at least an anode layer. As needed, the anode comprises an anode current collector.

The anode layer contains an anode active material. As optional components, the anode layer may contain a solid electrolyte, an electroconductive material, a binder, etc.

As the anode active material, a conventionally-known material may be used. As the conventionally-known material, examples include, but are not limited to, elemental Li, a lithium alloy, carbon, elemental Si, a Si alloy and $Li_4Ti_5O_{12}$ (LTO).

As the lithium alloy, examples include, but are not limited to, LiSn, LiSi, LiAl, LiGe, LiSb, LiP and LiIn.

As the Si alloy, examples include, but are not limited to, alloys with metals such as Li. Also, the Si alloy may be an alloy with at least one kind of metal selected from the group consisting of Sn, Ge and Al.

The form of the anode active material is not particularly limited. For example, the anode active material may be in a particulate form or a thin film form.

When the anode active material is in a particulate form, the average particle diameter ($D_{50}$) of the anode active material particles may be 1 nm or more and 100 $\mu$m or less, or it may be 10 nm or more and 30 $\mu$m or less, for example.

As the electroconductive material, binder and solid electrolyte contained in the anode layer, examples include, but are not limited to, those exemplified above as the electroconductive material, binder and solid electrolyte contained in the above-described cathode layer.

The method for forming the anode layer is not particularly limited. As the method, examples include, but are not limited to, pressure-forming a powdered anode mix that contains the anode active material and, as needed, other components such as an electroconductive material and a binder. Another example of the method for producing the anode layer is as follows: an anode layer slurry containing the anode active material, a solvent and, as needed, other components such as an electroconductive material and a binder, is prepared; the anode layer slurry is applied on one surface of the anode current collector or solid electrolyte layer; and the applied anode layer slurry is dried, thereby forming the anode layer. As the solvent used in the anode layer slurry, examples include, but are not limited to, those exemplified above as the solvent used in the cathode layer slurry. As the method for applying the anode layer slurry to one surface of the anode current collector or solid electrolyte layer, examples include, but are not limited to, those exemplified above as the method for applying the cathode layer slurry.

As the anode current collector, the same metal as the cathode current collector, may be used.

The form of the anode current collector is not particularly limited. It may be the same form as the above-described cathode current collector.

The form of the whole anode is not particularly limited. It may be a sheet form. In this case, the thickness of the whole anode is not particularly limited. It can be determined depending on desired performance.

As needed, the all-solid-state battery comprises an outer casing for housing the cathode, the anode and the solid electrolyte layer.

The form of the outer casing is not particularly limited. As the form, examples include, but are not limited to, a laminate form.

The material for the outer casing is not particularly limited, as long as it is a material that is stable in electrolytes. As the material, examples include, but are not limited to, resins such as polypropylene, polyethylene and acrylic resin.

As the all-solid-state battery, examples include, but are not limited to, an all-solid-state lithium battery in which a lithium metal deposition-dissolution reaction is used as an anode reaction, an all-solid-state lithium ion battery in which intercalation of lithium in the anode active material is used as an anode reaction, an all-solid-state sodium battery, an all-solid-state magnesium battery and an all-solid-state calcium battery. The all-solid-state battery may be the all-solid-state lithium ion battery. Also, the all-solid-state battery may be a primary or secondary battery.

As the form of the all-solid-state battery, examples include, but are not limited to, a coin form, a laminate form, a cylindrical form and a square form.

The method for producing the all-solid-state battery of the disclosed embodiments, is as follows, for example. First, the solid electrolyte layer is formed by pressure-forming a powdered solid electrolyte material. Next, the cathode layer is obtained by pressure-forming the powdered cathode mix on one surface of the solid electrolyte layer. Then, the anode layer is obtained by pressure-forming the powdered anode mix on the other surface of the solid electrolyte layer. As needed, a current collector is attached to a cathode layer-solid electrolyte layer-anode layer assembly thus obtained. Finally, the assembly may be used as the all-solid-state battery.

In this case, the press pressure applied for pressure-forming the powdered solid electrolyte material, the powdered cathode mix and the powdered anode mix, is generally about 1 MPa or more and about 600 MPa or less.

The pressure applying method is not particularly limited. As the method, examples include, but are not limited to, pressing by use of a plate press machine, a roll press machine or the like.

Another example of the method for forming the all-solid-state battery of the disclosed embodiments, is as follows. First, the solid electrolyte layer is formed by pressure-forming the powdered solid electrolyte material. The cathode layer slurry is applied on one surface of the cathode current collector. The applied cathode layer slurry is dried, thereby obtaining the cathode comprising the cathode layer. Then, the anode layer slurry is applied on one surface of the anode current collector. The applied anode layer slurry is dried, thereby obtaining the anode comprising the anode layer. The solid electrolyte layer is disposed between the cathode layer and the anode layer to ensure that the cathode current collector, the cathode layer, the solid electrolyte layer, the anode layer and the anode current collector are arranged in this order, thereby obtaining the all-solid-state battery.

The production of the all-solid-state battery may be carried out in the state that moisture is removed from the system as much as possible. For example, it is thought to be effective to depressurize the inside of the system in the production steps and to replace the inside of the system by a substantially moisture-free gas (such as inert gas) in the production steps.

EXAMPLES

(Example 1)

[Production of solid electrolyte layer]

The following raw materials for a solid electrolyte layer were prepared.

Solid electrolyte: $10LiI\text{-}15LiBr\text{-}75(3Li_2S\text{-}P_2S_5)$
Binder: PVdF
Solvent: Butyl butyrate
Zirconia: Tetragonal stabilized zirconia obtained by dissolving 3 mol % of $Y_2O_3$ in zirconia (3 yttria stabilized zirconia (or 3YSZ) manufactured by Daiichi Kigenso Kagaku Kogyo Co., Ltd.)

These raw materials were mixed to obtain a solid electrolyte layer paste. The amount of the tetragonal stabilized zirconia added was determined to ensure that when the total volume of the solid electrolyte layer to be obtained is determined as 100 volume %, the percentage of the stabilized zirconia contained in the solid electrolyte layer is 4.9 volume %.

The paste was applied on an Al foil. The applied paste was dried on a hot plate (product name: ND-2A, manufactured by: AS ONE Corporation) at 100°C for 30 minutes, thereby forming the solid electrolyte layer on the Al foil. Then, the solid electrolyte layer was removed from the Al foil.

[Evaluation for crack sensitivity of solid electrolyte layer]

A total of two solid electrolyte layers were produced by the above-described method. The solid electrolyte layers were placed on both sides of a Cu foil to obtain a stack. The stack was pressed by use of a roll press machine (product name: SA-602, manufactured by: Tester Sangyo Co., Ltd.) at a line pressure of 5 ton/cm ($\approx$ 490 MPa/cm) and a temperature of 170°C, thereby obtaining a sample solid electrolyte layer in which the solid electrolyte layers on both sides of the Cu foil were densified.

Then, the sample solid electrolyte layer was cut into a dumbbell-shaped specimen (dumbbell No. 6 (JIS K 6251)) to obtain an evaluation sample.

For crack sensitivity evaluation, the evaluation sample was subjected to tensile test (testing rate: 1 mm/min) by use of a tensile tester (product name: STB-1225S, manufactured by: A&D Co., Ltd.), and the moment that cracking occurred in the solid electrolyte layer (the evaluation sample) was observed by a high-speed camera (product name: FASTCAM MINI AX200, manufactured by: Photron Ltd.) The frame rate was set to 60 fps.

From the thus-obtained tensile test data and the data recorded by the high-speed camera, the strain amount at the moment that cracking occurred in the solid electrolyte layer (the evaluation sample) was calculated. The result is shown in Table 1.

The strain amount is a value calculated by the following formula. More specifically, the strain amount is a value obtained as follows. First, the size of the solid electrolyte layer (the evaluation sample) before the tensile test (i.e., the original size of the solid electrolyte layer) was subtracted from the size of the solid electrolyte layer (the evaluation sample) at the moment that the cracking occurred in the solid electrolyte layer by the tensile test (i.e., the size of the cracked solid electrolyte layer). The resulting value was divided by the size of the solid electrolyte layer (the evaluation sample) before the tensile test (i.e., the original size of the solid electrolyte layer). Then, the thus-obtained value was multiplied by 100, thereby obtaining the strain amount.

```
Strain amount (%)
= [(The size of the cracked solid electrolyte layer - the
original size of the solid electrolyte layer) / (the original
size of the solid electrolyte layer)] × 100
```

The larger the strain amount, the more likely the solid electrolyte layer is to follow external force and deform when the external force is applied to the solid electrolyte layer. Accordingly, the strain amount serves as an index to determine whether cracking is less likely to occur in the solid electrolyte layer or not.

[Evaluation for conductivity of solid electrolyte layer]

A solid electrolyte layer was produced by the method described in the "Production of solid electrolyte layer". The solid electrolyte layer was pulverized to obtain a powder. Pt foils were used as working and counter electrodes, and the powder was placed between the working and counter electrodes. They were pressed to produce a cell in which the working electrode, the solid electrolyte layer, and the counter electrode were stacked in this order.
AC impedance measurement of the cell was carried out by use of an impedance analyzer (product name: VMP3, manufactured by: Bio-logic SAS), thereby obtaining a cole-cole plot. A resistance value was obtained from an Rs value shown in the plot. Using the resistance value, the lithium ion conductivity at 25°C of the solid electrolyte layer of the cell, was calculated. The result is shown in Table 1.

(Example 2)

A solid electrolyte layer for all-solid-state batteries was produced in the same manner as Example 1, except that in the "Production of solid electrolyte layer", the amount of the tetragonal stabilized zirconia added was determined to ensure that when the total volume of the solid electrolyte layer to be obtained is determined as 100 volume %, the percentage of the stabilized zirconia contained in the solid electrolyte layer is 9.8 volume %. Then, the strain amount and lithium ion conductivity of the solid electrolyte layer were measured in the same manner as Example 1. The results are shown in Table 1.

(Example 3)

A solid electrolyte layer for all-solid-state batteries was produced in the same manner as Example 1, except that in the "Production of solid electrolyte layer", the amount of the tetragonal stabilized zirconia added was determined to ensure that when the total volume of the solid electrolyte layer to be obtained is determined as 100 volume %, the percentage of the stabilized zirconia contained in the solid electrolyte layer is 13.0 volume %. Then, the strain amount and lithium ion conductivity of the solid electrolyte layer were measured in the same manner as Example 1. The results are shown in Table 1.

(Example 4)

A solid electrolyte layer for all-solid-state batteries was produced in the same manner as Example 1, except that in the "Production of solid electrolyte layer", the amount of the tetragonal stabilized zirconia added was determined to ensure that when the total volume of the solid electrolyte layer to be obtained is determined as 100 volume %, the percentage of the stabilized zirconia contained in the solid electrolyte layer is 17.0 volume %. Then, the strain amount and lithium ion conductivity of the solid electrolyte layer were measured in the same manner as Example 1. The results are shown in Table 1.

(Example 5)

A solid electrolyte layer for all-solid-state batteries was produced in the same manner as Example 1, except that in the "Production of solid electrolyte layer", the amount of the tetragonal stabilized zirconia added was determined to ensure that when the total volume of the solid electrolyte layer to be obtained is determined as 100 volume %, the percentage of the stabilized zirconia contained in the solid electrolyte layer is 24.0 volume %. Then, the strain amount and lithium ion conductivity of the solid electrolyte layer were measured in the same manner as Example 1. The results are shown in Table 1.

(Example 6)

A solid electrolyte layer for all-solid-state batteries was produced in the same manner as Example 1, except that in the "Production of solid electrolyte layer", the amount of the tetragonal stabilized zirconia added was determined to ensure that when the total volume of the solid electrolyte layer to be obtained is determined as 100 volume %, the percentage of the stabilized zirconia contained in the solid electrolyte layer is 28.0 volume %. Then, the strain amount and lithium ion conductivity of the solid electrolyte layer were measured in the same manner as Example 1. The results are shown in Table 1.

(Comparative Example 1)

A solid electrolyte layer for all-solid-state batteries was produced in the same manner as Example 1, except that in the "Production of solid electrolyte layer", a tetragonal stabilized zirconia was not added. Then, the strain amount and lithium ion conductivity of the solid electrolyte layer were measured in the same manner as Example 1. The results are shown in Table 1.

(Comparative Example 2)

A solid electrolyte layer for all-solid-state batteries was produced in the same manner as Example 1, except that in the "Production of solid electrolyte layer", a monoclinic zirconia was used in place of the tetragonal stabilized zirconia, and the amount of the monoclinic zirconia added was determined to ensure that when the total volume of the solid electrolyte layer to be obtained is determined as 100 volume %, the percentage of the monoclinic zirconia contained in the solid electrolyte layer is 17.0 volume %. Then, the strain amount and lithium ion conductivity of the solid electrolyte layer were measured in the same manner as Example 1. The results are shown in Table 1.

(Comparative Example 3)

A solid electrolyte layer for all-solid-state batteries was produced in the same manner as Example 1, except that in the "Production of solid electrolyte layer", alumina was used in place of the tetragonal stabilized zirconia, and the amount of the added alumina was determined to ensure that when the total volume of the solid electrolyte layer to be obtained is determined as 100 volume %, the percentage of the alumina contained in the solid electrolyte layer is 17.0 volume %. Then, the strain amount and lithium ion conductivity of the solid electrolyte layer were measured in the same manner as Example 1. The results are shown in Table 1. The alumina was used as an example that causes no phase transformation even when stress is applied.

Table 1

| | Type of additive | Percentage (Volume %) | Strain amount (%) | Lithium ion conductivity (mS/cm) |
|---|---|---|---|---|
| Example 1 | Tetragonal stabilized $ZrO_2$ | 4.9 | 4.2 | 2.7 |
| Example 2 | Tetragonal stabilized $ZrO_2$ | 9.8 | 6.4 | 2.3 |
| Example 3 | Tetragonal stabilized $ZrO_2$ | 13.0 | 7.2 | 2.0 |
| Example 4 | Tetragonal stabilized $ZrO_2$ | 17.0 | 7.7 | 1.6 |

(continued)

| | Type of additive | Percentage (Volume %) | Strain amount (%) | Lithium ion conductivity (mS/cm) |
|---|---|---|---|---|
| Example 5 | Tetragonal stabilized $ZrO_2$ | 24.0 | 8.1 | 0.9 |
| Example 6 | Tetragonal stabilized $ZrO_2$ | 28.0 | 8.2 | 0.5 |
| Comparative Example 1 | - | - | 3.6 | 3.1 |
| Comparative Example 2 | Monoclinic $ZrO_2$ | 17.0 | 3.6 | 1.4 |
| Comparative Example 3 | $Al_2O_3$ | 17.0 | 3.5 | 1.5 |

From Table 1, the following was confirmed: for the solid electrolyte layers of Examples 1 to 6, in each of which the tetragonal stabilized zirconia of from 4.9 volume % to 28.0 volume % was contained, the strain amount was increased higher than the solid electrolyte layer of Comparative Example 1, in which a tetragonal stabilized zirconia was not contained.

Accordingly, it was proved that the strain amount of the solid electrolyte layer is increased by incorporating the tetragonal stabilized zirconia in the solid electrolyte layer.

Meanwhile, it was confirmed that the lithium ion conductivity decreases as the percentage of the tetragonal stabilized zirconia contained in the solid electrolyte layer increases.

Accordingly, it was found that to obtain desired lithium ion conductivity, the percentage of the tetragonal stabilized zirconia contained in the solid electrolyte layer needs to be 28.0 volume % or less.

As a result of comparing Example 4 and Comparative Examples 2 and 3, the following was found. While the volume percentage of the monoclinic zirconia contained in the solid electrolyte layer of Comparative Example 2, that of the alumina contained in the solid electrolyte layer of Comparative Example 3, and that of the tetragonal stabilized zirconia contained in the solid electrolyte layer of Example 4 are the same, the strain amount of the solid electrolyte layers of Comparative Examples 2 and 3 are smaller than that of the solid electrolyte layer of Example 4 and are at the same level as the solid electrolyte layer of Comparative Example 1. Accordingly, the monoclinic zirconia and the alumina are not effective in suppressing the cracking of the solid electrolyte layer.

From the above results, it was proved that the cracking of the solid electrolyte layer is suppressed by using the tetragonal stabilized zirconia.

REFERENCE SIGNS LIST

11. Solid electrolyte layer
12. Cathode layer
13. Anode layer
14. Cathode current collector
15. Anode current collector
16. Cathode
17. Anode
100. All-solid-state battery

Claims

1. A solid electrolyte layer,
wherein the solid electrolyte layer is a solid electrolyte layer for all-solid-state batteries, and
wherein the solid electrolyte layer comprises a stabilized zirconia having a tetragonal crystal structure.

2. The solid electrolyte layer according to Claim 1, wherein, when a total volume of the solid electrolyte layer is determined as 100 volume %, the stabilized zirconia contained in the solid electrolyte layer is 9.8 volume % or more and 24.0 volume % or less.

3. The solid electrolyte layer according to Claim 1 or 2, wherein the stabilized zirconia is a solid solution containing, as a stabilizer for the tetragonal crystal structure, at least one oxide selected from the group consisting of $Y_2O_3$, $CeO_2$, MgO and CaO.

4. An all-solid-state battery comprising a cathode, an anode and a solid electrolyte layer disposed between the cathode and the anode, wherein the solid electrolyte layer is the solid electrolyte layer defined by any one of Claims 1 to 3.

FIG. 1

Europäisches
Patentamt

European
Patent Office

Office européen
des brevets

**EUROPEAN SEARCH REPORT**

Application Number

EP 19 21 3587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 358 516 A (LANGE FREDERICK F) 9 November 1982 (1982-11-09) | 1-3 | INV. H01M10/052 H01M10/0562 |
| Y | * abstract * | 4 | |
| Y | US 2018/183094 A1 (IKEJIRI JUNICHI [JP] ET AL) 28 June 2018 (2018-06-28) * paragraphs [0012] - [0018] * * claim 8 * | 4 | |
| A | CN 103 531 841 A (NINGBO INST MATERIALS TECHNOLOGY & ENG CAS) 22 January 2014 (2014-01-22) * paragraph [0056] * * example 2 * | 1-4 | |

TECHNICAL FIELDS
SEARCHED      (IPC)

H01M

The present search report has been drawn up for all claims

| Place of search | Date of completion of the search | Examiner |
|---|---|---|
| Munich | 13 January 2020 | Gregori, Giuliano |

EPO FORM 1503 03.82 (P04C01)

## ANNEX TO THE EUROPEAN SEARCH REPORT
## ON EUROPEAN PATENT APPLICATION NO.

EP 19 21 3587

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2020

| Patent document cited in search report | | Publication date | Patent family member(s) | | Publication date |
|---|---|---|---|---|---|
| US 4358516 | A | 09-11-1982 | NONE | | |
| US 2018183094 | A1 | 28-06-2018 | CN | 107851843 A | 27-03-2018 |
| | | | JP | 2017037769 A | 16-02-2017 |
| | | | US | 2018183094 A1 | 28-06-2018 |
| | | | WO | 2017026285 A1 | 16-02-2017 |
| CN 103531841 | A | 22-01-2014 | NONE | | |

EPO FORM P0459

For more details about this annex : see Official Journal of the European Patent Office, No. 12/82

**EP 3 671 931 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11214019 A
- JP 2017211186 A
- JP 2008184339 A